(19) Europäisches Patentamt
European Patent Office
Office européen des brevets

(11) EP 4 065 512 B1

(12) # EUROPÄISCHE PATENTSCHRIFT

(45) Veröffentlichungstag und Bekanntmachung des Hinweises auf die Patenterteilung:
**20.03.2024 Patentblatt 2024/12**

(21) Anmeldenummer: **19813448.8**

(22) Anmeldetag: **27.11.2019**

(51) Internationale Patentklassifikation (IPC):
***C01B 33/08*** (2006.01) ***C01B 33/107*** (2006.01)

(52) Gemeinsame Patentklassifikation (CPC):
**C01B 33/08; C01B 33/1071; C01B 33/10794**

(86) Internationale Anmeldenummer:
**PCT/EP2019/082727**

(87) Internationale Veröffentlichungsnummer:
**WO 2021/104618 (03.06.2021 Gazette 2021/22)**

(54) **VERFAHREN ZUR ENTFERNUNG EINER VERUNREINIGUNG AUS EINEM CHLORSILANGEMISCH**

METHOD FOR REMOVING AN IMPURITY FROM A CHLOROSILANE MIXTURE

PROCÉDÉ PERMETTANT D'ÉLIMINER UNE IMPURETÉ D'UN MÉLANGE DE CHLOROSILANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2022 Patentblatt 2022/40**

(73) Patentinhaber: **Wacker Chemie AG**
**81737 München (DE)**

(72) Erfinder:
- **KNOTH, Jens Felix**
**84533 Marktl (DE)**
- **BOCHMANN, Sebastian**
**08321 Zschorlau OT Albernau (DE)**
- **PÄTZOLD, Uwe**
**84489 Burghausen (DE)**
- **PROST, Sebastian**
**84375 Kirchdorf (DE)**

(74) Vertreter: **Belz, Ferdinand et al**
**Wacker Chemie AG**
**Hanns-Seidel-Platz 4**
**81737 München (DE)**

(56) Entgegenhaltungen:
**US-A- 3 126 248 US-A- 3 252 752**

- **DATABASE WPI Week 201306 Thomson Scientific, London, GB; AN 2013-A33701 XP002800048, -& JP 2013 001632 A (SHINETSU CHEM IND CO LTD) 7. Januar 2013 (2013-01-07)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft ein Verfahren zur zumindest teilweisen Entfernung einer Verunreinigung aus einem Gemisch, enthaltend zumindest ein Chlorsilan und/oder Organochlorsilan und zumindest eine Verunreinigung aus der Gruppe mit Borverbindung, Phosphorverbindung, Arsenverbindung und Antimonverbindung.

Bei der Herstellung von Halogensilanen, insbesondere Chlorsilane, können Verunreinigungen auftreten, die beispielsweise Bor, Arsen, Antimon oder Phosphor enthalten. Halogensilane sind Ausgangsstoff für die Herstellung von polykristallinem Silicium (Polysilicium, z.B. nach dem Siemens-Verfahren). Polysilicium wiederum ist unter anderem Ausgangsmaterial für die Erzeugung von einkristallinem Silicium, das in der Halbleiterindustrie zur Fertigung von elektronischen Bauelementen (z.B. Dioden, Bipolar- und MOS-Transistoren) verwendet wird. Bei der Fertigung dieser elektronischen Bauelemente findet zur gezielten Beeinflussung der elektrischen Leitfähigkeit für gewöhnlich ein lokal begrenztes Verunreinigen des einkristallinen Siliciums mit Dotierstoffen (z.B. Bor, Arsen) statt. Daher ist es unerlässlich, dass bereits das als Ausgangsstoff eingesetzte Polysilicium und dessen Grundstoffe einen möglichst geringen Anteil an Dotierstoffen aufweisen.

Typische Verunreinigungen sind z.B. Wasserstoff- und Halogenverbindungen des Bors, Arsens, Antimons und Phosphors. Diese sind in der Regel destillativ nur schwierig von den Halogensilanen zu trennen. Infolgedessen können sich die Verunreinigungen zumindest teilweise auch im Siliciumzwischen- bzw. -endprodukt (z.B. Polysilicium, einkristallines Silicium, Silicone) wiederfinden. Im Rahmen der Qualitätskontrolle ist daher eine Überwachung von Art und Menge der Verunreinigungen erforderlich. Idealerweise sollte Polysilicium, das für Solar- und Halbleiteranwendungen herangezogen wird, eine Borkonzentration von weniger als 20 ppta aufweisen.

Die Herstellung von Chlorsilanen, insbesondere Trichlorsilan (TCS), kann durch drei Verfahren erfolgen, denen folgende Reaktionen zugrunde liegen (vgl. WO 2016/198264 A1):

(1) $SiCl_4 + H_2 \text{-->} SiHCl_3 + HCl$ + Nebenprodukte

(2) $Si + 3SiCl_4 + 2H_2 \text{-->} 4SiHCl_3$ + Nebenprodukte

(3) $Si + 3HCl \text{-->} SiHCl_3 + H_2$ + Nebenprodukte

Als Nebenprodukte können weitere Chlorsilane anfallen, beispielsweise Monochlorsilan ($H_3SiCl$), Dichlorsilan (DCS, $H_2SiCl_2$), Siliciumtetrachlorid (STC, $SiCl_4$) sowie Di- und Oligosilane. Neben den oben genannten Verunreinigungen können ferner Verunreinigungen wie Kohlenwasserstoffe, Organochlorsilane sowie Metallchloride Bestandteil der Nebenprodukte sein.

Insbesondere die mit dem in den Verfahren (2) und (3) üblicherweise eingesetzten metallurgischen Silicium eingebrachten Verunreinigungen können in nachfolgende Prozessschritte verschleppt werden. Hierbei sind neben Kohlenstoff besonders klassische Dotierstoffe wie Bor, Phosphor, Arsen und Antimon von Bedeutung. Besondere Schwierigkeiten können Verunreinigungen mit borhaltigen Verbindungen verursachen, da Bor aufgrund seines Verteilungskoeffizienten von 0,8 durch Zonenschmelzen im Prozessverlauf nahezu nicht mehr aus Silicium abzutrennen ist. In Abhängigkeit der Qualität der verwendeten Rohstoffe und des Materials der Reaktorbauteile sowie der jeweiligen Reaktionsbedingungen werden in den Rohprodukten der Verfahren (1) bis (3) unterschiedliche Gehalte an Verunreinigungen gefunden. Es ist üblich, die erhaltenen Rohprodukte destillativ aufzureinigen. Allerdings kann diese Aufreinigung in einigen Fällen aufgrund der ähnlichen Siedepunkte von Produkt und Verunreinigung besonders schwierig und technisch sehr aufwändig sein. Beispielsweise kann Bortrichlorid (Siedepunkt: 12,4°C) von DCS (Siedepunkt: 8,4°C) nur unter erheblichem Aufwand destillativ abgetrennt werden.

Des Weiteren erfordert auch die Anwendung von Organochlorsilanen insbesondere im Bereich der Nanotechnologie und Mikroelektronik ein möglichst hohen Reinheitsgrad.

Die Herstellung von Organochlorsilanen, insbesondere Methylchlorsilane, erfolgt insbesondere durch die Müller-Rochow-Direktsynthese (vgl. DE 10 2014 225 460 A1):

(4) $Si + CH_3Cl \text{-->} (CH_3)_nSiCl_{4-n}$ + Nebenprodukte, (n = 1-4)

Dabei wird eine organische Chlorkohlenstoffverbindung mit metallurgischem Silicium unter Zusatz von Kupferkatalysatoren und Promotoren zu Organochlorsilanen, insbesondere Methylchlorsilanen, umgesetzt. Auch hier können insbesondere durch das metallurgischem Silicium Verunreinigungen eingeschleppt werden.

Organochlorsilane werden beispielsweise in der Halbleiterindustrie bei der Abscheidung epitaktischer Schichten eingesetzt. Hier verursachen bereits geringste Mengen an Verunreinigungen, insbesondere solche, die Dotierstoffe wie Bor, Phosphor, Arsen und Antimon enthalten, erhebliche Probleme. Generell können Dotierstoffe zu unerwünschten Dotiereffekten führen und durch Migrationsprozesse die Lebenszeit elektrischer Bauteile herabsetzen.

Bei der Destillation zur Gewinnung von hochreiner Chlorsilane und Organochlorsilane fallen in der Regel Nebenströme an, welche die Verunreinigungen enthalten. Um die Verunreinigungen zu entfernen werden meist die Nebenströme vollständig entfernt, wodurch nicht unerhebliche Mengen an Wertprodukt verloren gehen. Dies kann hohe Kosten zur Folge haben (Silicium-Verlust, Halogen-Verlust, Entsorgungskosten). Zusätzlich wird bei der teilweise mehrstufig ausgeführten Destillation ein hoher Energieeinsatz meist in Form von Dampf benötigt.

Daher werden verschiedene Ansätze verfolgt, um eine effektive Abtrennung von insbesondere dotierstoffhaltigen Verunreinigungen zu erreichen.

DE 10 2008 004 397 A1 beschreibt die Zugabe von Triphenylmethylchlorid zu einem aufzureinigenden Halogensilangemisch, um mit Bor und Aluminium schwerlösliche Komplexe zu erzeugen, welche dann mechanisch abgetrennt werden können. Gemäß DE 10 2008 004 396 A1 erfolgt die Abtrennung solcher schwerlöslichen Komplexe destillativ. Grundsätzlich werden durch den Einsatz von Komplexbildnern Nebenströme generiert, in welchen neben den aufkonzentrierten, abzutrennenden Komplexen Produkte enthalten sind. Diese Nebenströme müssen entweder aufwändig aufgearbeitet oder verworfen werden.

Gemäß CA 1162028 A werden borhaltige Verunreinigungen bei der Disproportionierung von Chlorsilanen durch Adsorption an einem festen Ionentauscher entfernt. Der Ionentauscher enthält tertiäre oder quartäre Ammoniumgruppen. Nachteilig ist, dass durch die Disproportionierung ein Chlorsilangemisch mit veränderter Zusammensetzung entsteht, das zur Isolierung nur eines Zielproduktes einer erneuten Auftrennung bedarf.

Aus der EP 0 105 201 ist ein Verfahren zur Abtrennung von Schwermetallionen von z.B. Uran, Gallium und Quecksilber aus einer wässrigen Lösung unter Verwendung eines chelatbildenden Amidoximharzes bekannt. Problematisch bei der Verwendung wässriger Lösungen ist die Hydrolyseempfindlichkeit von Halogensilanen.

DE 1 073 460 beschreibt die Reinigung gasförmiger Chlorsilane, wobei diese über ein Adsorbens geleitet werden. Das Adsorbens ist mit organischen oder anorganischen Stoffen beladen, die mit gasförmigen Boranen stabile Additionsverbindungen ausbilden, mit den Chlorsilanen allerdings keine Reaktion eingehen. Als für die Beladung geeignet wird unter anderem auch Dimethylglyoxim beschrieben. Nachteilig ist hier, dass die Durchführung in der Gasphase zunächst die Verdampfung der flüssig anfallenden Chlorsilane erfordert. Die Gasphase ist jedoch erforderlich, um ein Auswaschen der organischen oder anorganischen Stoffe aus dem mit diesen getränkten Adsorbens zu vermeiden, da keine chemische Bindung vorliegt. Generell können aufgrund des im Vergleich zur Flüssigkeit hohen Gasvolumens zudem nur deutlich geringere Durchsätze erzielt werden.

Dagegen erfolgt gemäß US 3,126,248 die Reinigung in kondensierter Phase, wobei die in der DE 1 073 460 vorgeschlagenen organischen oder anorganischen Stoffe eingesetzt werden. Das gereinigte Chlorsilan muss hier von den aus dem Adsorbens herausgewaschenen Stoffen mittels Destillation getrennt werden. Es ist also ein weiterer Trennschritt erforderlich.

JP 2013-1632 A offenbart ein Verfahren, bei welchem zur Destillation von TCS Dimethylglyoxim zugegeben wird, um Bor- und Phosphorverbindungen zu entfernen.

Der vorliegenden Erfindung lag die Aufgabe zugrunde, ein besonders effizientes und wirtschaftliches Verfahren zur Reinigung von Halogensilanen bereitzustellen, bei dem die aus dem Stand der Technik bekannten Nachteile vermieden werden.

Diese Aufgabe wird gelöst durch ein Verfahren zur zumindest teilweisen Entfernung einer Verunreinigung aus einem Gemisch, enthaltend zumindest ein Chlorsilan und/oder Organochlorsilan und zumindest eine Verunreinigung aus der Gruppe mit Borverbindung, Phosphorverbindung, Arsenverbindung und Antimonverbindung. Das Verfahren umfasst folgende Schritte:

a) Inkontaktbringen des flüssigen Gemischs mit einem Trägermaterial, das mit einem Amidoxim der allgemeinen Strukturformel (I) funktionalisiert ist,

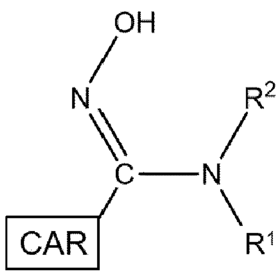

(I),

wobei

CAR = Trägermaterial und

$R^1$, $R^2$ = unabhängig voneinander H, Alkyl, Alkenyl, Aryl, Alkylaryl;

b) gegebenenfalls Abtrennen des funktionalisierten Trägermaterials.

Nach dem Abtrennen und/oder Inkontaktbringen weist das Gemisch einen verringerten Gehalt an Verunreinigung auf.

Es hat sich gezeigt, dass durch die Verwendung eines mit Amidoxim funktionalisierten Trägermaterials flüssige Chlorsilan- und/oder Organochlorsilanzusammensetzungen bzw. -gemische hocheffizient von Verunreinigungen der genannten Art getrennt werden können. Neben der chemischen Reaktion zwischen der Amidoxim-Funktionalität und der Verunreinigung kann zwar grundsätzlich auch eine Reaktion zwischen dem Chlorsilan/Organochlorsilan und der Amidoxim-Funktionalität auftreten, allerdings ist die Affinität des Amidoxims zu den Verunreinigungen so hoch, dass diese Reaktion vernachlässigbar ist. Die Aktivität des funktionalisierten Trägermaterials wird nicht eingeschränkt. Des Weiteren findet besonders vorteilhaft keine Disproportionierung des Chlorsilans/Organochlorsilans statt, wodurch eine nachgelagerte Trennung eines entstehenden Mehrkomponentengemisches nicht notwendig wird. So entstehen nach einer Dauer von 24 h für gewöhnlich weniger als 1 Gew.-%, insbesondere weniger als 0,5 Gew.-%, an Disproportionierungsprodukten. Im Regelfall sind es sogar weniger als 0,2 Gew.-%.

Der Druck und die Temperatur des Verfahrens werden so gewählt, dass das Gemisch in flüssigem Aggregatszustand vorliegt. Vorzugsweise findet der Verfahrensschritt a) in einem Druckbereich von 1 bis 20 bar (g), besonders bevorzugt 1,1 bis 10 bar (g), insbesondere 1,25 bis 5 bar (g), statt. Die Temperatur liegt dabei vorzugsweise bei -50 bis 160°C, besonders bevorzugt bei -30 bis 100°C, insbesondere bei -10 bis 40°C.

Gemäß der Formel (I) kann das Amidoxim mit seinem C-Atom direkt an das Trägermaterial (bzw. eine funktionelle Gruppe des Trägermaterials) gebunden sein. Insbesondere handelt es sich um ein kovalente Bindung. Als Beispiel kann die Synthese des Amidoxims aus einer Nitril-Gruppe eines Polyacrylnitrils oder Polyacrylnitril-Copolymers als Trägermaterial angeführt werden. Zwischen dem Trägermaterial und dem Amidoxim kann allerdings auch ein Linker vorgesehen sein. Bei dem Linker kann es sich beispielsweise um eine Methylengruppe, Benzylgruppe oder eine lineare Kohlenwasserstoffkette mit 2 bis 5 C-Atomen handeln.

Der Alkyl-Rest für $R^1$ und/oder $R^2$ kann linear, verzweigt oder cyclisch sein. Beispielsweise kann es sich um einen Rest ausgewählt aus der Gruppe mit Me, Et, Pr, i-Pr, n-Bu, i-Bu, t-Bu handeln. Vorzugsweise umfasst der Alkyl-Rest 1 bis 16, besonders bevorzugt 1 bis 12, insbesondere 1 bis 6, C-Atome.

Vorzugsweise sind $R^1$ und $R^2$ unabhängig voneinander H oder Me. Besonders bevorzugt entsprechen beide Reste einem H-Atom. Überraschend hat sich gezeigt, dass ein Aminstickstoff ($R^1$, $R^2$ = H) keine Disproportionierung der Chlorsilane/Organochlorsilane begünstigt wie dies z.B. bei aminofunktionalisierten Ionentauschern der Fall ist.

Bei dem Chlorsilan handelt es sich vorzugsweise um ein acyclisches Chlorsilan der allgemeinen Formel $H_xSi_nCl_{(2n+2-x)}$, wobei $0 \leq x \geq 12$ und $1 \leq n \geq 5$ ist. Alternativ der zusätzlich kann es sich um ein cyclisches Chlorsilan der allgemeinen Formel $H_xSi_nCl_{(2n-x)}$, wobei $0 \leq x \geq 20$ und $4 \leq n \geq 10$ ist, handeln. Es kann nur eines oder aber mehrere dieser Chlorsilane in dem Gemisch enthalten sein.

Insbesondere ist das Chlorsilan ausgewählt aus der Gruppe mit STC, TCS, DCS und Kombinationen daraus.

Bei dem Organochlorsilan handelt es sich vorzugsweise um ein acyclisches Organochlorsilan der allgemeinen Formel $H_xSi_nR^3{}_yCl_{(2n+2-x-y)}$ mit $0 \leq x \geq 11$, $1 \leq n \geq 5$ und $1 \leq y \geq 12$. Alternativ der zusätzlich kann es sich um ein cyclisches Organochlorsilan der allgemeinen Formel $H_xSi_nR^3{}_yCl_{(2n-x-y)}$ mit $0 \leq x \geq 19$ , $4 \leq n$ >: 10 und $1 \leq y \geq 20$ handeln, wobei $R^3$ = Alkyl, Aryl, Alkylaryl oder Alkoxy.

Bezüglich des Alkyl-Rests kann auf die obigen Ausführungen verwiesen werden. Vorzugsweise entspricht $R^3$ allerdings einem Me-, Methoxy- oder Ethoxy-Rest.

Das erfindungsgemäße Verfahren wird vorzugsweise wasserfrei oder zumindest im Wesentlichen wasserfrei durchgeführt. Unter im Wesentlichen wasserfrei soll verstanden werden, dass Spuren von Wasser im funktionalisierten oder nicht funktionalisierten Trägermaterial enthalten sein können. Dies sind üblicherweise weniger als 5 Gew.-%. Das Gemisch ist generell wasserfrei.

Das funktionalisierte Trägermaterial kann einen Anteil Wasser von weniger als 5 Gew.-%, bevorzugt weniger als 3 Gew.-%, besonders bevorzugt weniger als 2 Gew.-%, enthalten. Für die Wirkungsweise ist es grundsätzlich unerheblich, dass das Trägermaterial die genannten Spuren an Wasser aufweist. Um Verluste durch Chlorsilan-/Organochlorsilan-Hydrolyse zu vermeiden, wird für gewöhnlich der Wassergehalt so gering wie möglich zu halten. Grundsätzlich wird also keine Feuchtigkeit zusätzlich zugeführt. Allerdings ist es in der Regel auch nicht erforderlich, das Trägermaterial einem zusätzlichen Trockenschritt zu unterziehen, da der genannte Wasseranteil bei üblichen Trägermaterialien regelmäßig nicht überschritten wird.

Das Trägermaterial als Träger der Amidoxim-Funktionalisierung kann ausgewählt sein aus einem dem Fachmann geläufigen Polymer zur Herstellung von Ionentauschern und Adsorbern. Vorzugsweise ist es ausgewählt aus der Gruppe mit Polyacrylnitril, Polyacrylsäure, Polyacrylsäureester, Polymethacrylsäure, Polymethacrylsäureester, Styrol-Divinylbenzol-Copolymer und Kombinationen und Copoylmere daraus. Besonders bevorzugt handelt es sich um ein

Styrol-Divinylbenzol-Copolymer und/oder Acrylnitril-Divinylbenzol-Copolymer. Insbesondere handelt es sich um ein Copolymer aus Acrylnitril-Divinylbenzol-Copolymer und Polymethacrylsäureester. Ferner kann es sich bei dem Feststoff um eine Kieselsäure handeln.

Bei dem Trägermaterial handelt es sich insbesondere um einen Feststoff. Vorzugsweise handelt es sich also um ein festes Trägermaterial. Beispielsweise kann es in Form von Partikeln und/oder Fasern vorliegen. Besonders bevorzugt liegt das Trägermaterial in partikulärer Form vor und weist vorzugsweise eine Oberfläche von 10 bis 2000 $m^2/g$, besonders bevorzugt von 25 bis 1000 $m^2/g$, insbesondere von 50 bis 500 $m^2/g$, auf. Im funktionalisierten Zustand kann die Oberfläche abnehmen. Typische Werte liegen hier bei 5 bis 500 $m^2/g$. Die Oberfläche kann bspw. mittels BET-Messung erfolgen (DIN ISO 9277).

Beispielsweise kann es sich um Partikel mit einer mittleren Partikelgröße (= mittlerer Partikeldurchmesser) von 0,149 bis 4,760 mm (4 bis 100 mesh), bevorzugt 0,177 bis 2,0 mm (10 bis 80 mesh), besonders bevorzugt 0,400 bis 1,410 mm (14 bis 40 mesh), handeln. Die Bestimmung kann mittels dynamischer Bildanalyse (ISO 13322-2), Laserstreuung oder Siebung erfolgen.

Das Trägermaterial kann ferner makroporös ausgebildet sein. Insbesondere kann es sich um makroporöse Partikel handeln. Vorzugsweise weist das Trägermaterial einen mittleren Porendurchmesser von 40 bis 900 $*10^{-10}$ m, bevorzugt von 50 bis 800 $*10^{-10}$ m, besonders bevorzugt von 75 bis 700 $*10^{-10}$ m, auf. Die mittleren Porendurchmesser bleiben für gewöhnlich auch nach der Funktionalisierung des Trägermaterials in den genannten Größenbereichen.

Die Porenstruktur kann gegebenenfalls unabhängig von der Funktionalisierung des Trägermaterials eine zumindest geringfügige Adsorption der Verunreinigungen ermöglichen.

Das funktionalisierte Trägermaterial kann durch das Inkontaktbringen mit dem Gemisch ein Quellverhalten zeigen. Vorzugsweise liegt die Volumenzunahme (Quellung) eines partikelförmigen Trägermaterials allerdings bei ≤ 7 % auf, besonders bevorzugt ≤ 6 %, insbesondere bei ≤ 5 %.

Vorzugsweise liegt das funktionalisierte Trägermaterial in Verfahrensschritt a) als ein Festbett vor. Insbesondere wird das Festbett von dem Gemisch kontinuierlich durchströmt. Auf diese Weise kann ein separates Abtrennen des funktionalisierten Trägermaterials entfallen.

Gemäß einer bevorzugten Ausführungsform liegt in Schritt a) das funktionalisierte Trägermaterial als Festbett in einem oder mehreren in Reihe oder parallel angeordneten Behältern vor, die von dem Gemisch bevorzugt kontinuierlich durchströmt werden.

Die hydrodynamische Verweilzeit $\tau$ des Gemischs in einem mit dem funktionalisierten Trägermaterial gefüllten Reaktionsvolumen (dabei kann es sich um einen oder mehrere Behälter handeln) beträgt bevorzugt 0,5 bis 1800 s, besonders bevorzugt 1,0 bis 1200 s, insbesondere 1,5 bis 900 s. $\tau$ berechnet sich nach

$$\tau = \frac{V_R}{\dot{V}},$$

wobei

$V_R$: Reaktionsvolumen: mit funktionalisiertem Trägermaterial gefülltes Volumen [$m^3$],
$\dot{V}$: Volumenstrom des Gemischs [$m^3/s$].

Das gesamte Reaktionsvolumen (bei mehreren, beispielsweise hintereinander angeordneten, Behältern ist die Summe der einzelnen Reaktions- oder Behältervolumina das gesamte Reaktionsvolumen) beträgt bevorzugt 0,025 bis 5 m3, besonders bevorzugt 0,05 bis 3 m3, insbesondere 0,1 bis 2 $m^3$.

Vorzugsweise wird die Rückhaltung des als Festbett vorliegenden funktionalisierten Trägermaterials mit einem Sieb oder einer Lochblende umgesetzt.

Grundsätzlich kann das Gemisch auch eine vorgegebene Zeitspanne mit dem funktionalisierten Trägermaterial als Festbett oder als Wirbelbett in Kontakt bleiben und danach abgetrennt wird. Das Abtrennen kann im einfachsten Fall durch ein Ablassen des Gemischs aus einem Behälter erfolgen, wobei das feste, funktionalisierte Trägermaterial durch ein Sieb oder eine Lochblende zurückgehalten wird.

Vorzugsweise erfolgt das Abtrennen des mit der Verunreinigung beladenen, funktionalisierten Trägermaterials im Verfahrensschritt b) durch eine Fest-Flüssig-Trennung, insbesondere durch eine Filtration.

Das Amidoxim-funktionalisierte Trägermaterial kann mit 1 bis 100 mg, bevorzugt 1,5 bis 80 mg, besonders bevorzugt 2 bis 60 mg, Verunreinigung pro Gramm des funktionalisierten Trägermaterials beladen werden.

Vorzugsweise wird vor dem Schritt a) und/oder nach dem Schritt a) oder gegebenenfalls nach dem Schritt b) die Konzentration der Verunreinigung in dem Gemisch bestimmt. Auf diese Weise kann beispielsweise bei einem kontinuierlichen Durchströmen des funktionalisierten Trägermaterials als Festbett der Volumenstrom des Gemischs angepasst werden. Ferner kann, sobald die Konzentration an Verunreinigung nach der Passage des funktionalisierten Trägermaterials einen Sollwert übersteigt, auf eine identisch aufgebaute parallele Adsorberstrecke geschaltet werden.

Laufzeiten werden so maximiert. Die Bestimmung der Konzentration der Verunreinigungen kann mittels ICP-MS (Massenspektrometrie mit induktiv gekoppeltem Plasma) und/oder ICP-OES (Optische Emissionsspektrometrie mit induktiv gekoppeltem Plasma) erfolgen, wobei die Probenentnahme vorzugsweise kontinuierlich erfolgt. Eine andere Möglichkeit, die Konzentration der Verunreinigung beispielsweise in einem Chlorsilangemisch, das im Rahmen des Siemens-Verfahrens eingesetzt wird, zu bestimmen, ist die Messung des elektrischen Widerstandes des abgeschiedenen Siliciums. Die Messung des Widerstandes kann gemäß dem Standard SEMI MF84 erfolgen. Weiterhin können die Dotierstoffe im abgeschiedenen Silicium auch mittels Photolumineszenz wie beispielsweise in DE 10 2011 077 455 A1 beschrieben ermittelt werden.

Gemäß einer bevorzugten Ausführungsform kann das Gemisch nach einem ersten Inkontaktbringen mit dem funktionalisierten Trägermaterial nach Verfahrensschritt a) zu dem noch unbehandelten Gemisch vor Schritt a) zurückgeführt werden, um erneut mit dem funktionalisierten Trägermaterial in Kontakt gebracht zu werden. Es kann also bevorzugt sein, den Schritt a) zweimal oder mehrmals durchzuführen.

Bei der Verunreinigung handelt es sich insbesondere um Wasserstoff-, Halogen-, Kohlenstoff-, und/oder Siliciumverbindungen von Bor, Phosphor, Arsen (z.B. $AsCl_3$) und/oder Antimon (z.B. $SbCl_3$, $SbCl_5$). Das Gemisch kann verschiedene Verbindungen von einem oder von mehreren der genannten Elemente als Verunreinigung enthalten. Vorzugsweise handelt es sich bei der Verunreinigung um Verbindungen des Bors und/oder Phosphors (z.B. $PCl_3$, $PHCl_2$; $MePH_2$; $MeSiH_2PH_2$). Besonders bevorzugt handelt es sich um Verbindungen des Bors. Insbesondere kann es sich um Borane (z.B. $B_2H_6$) und/oder Halogenborane ($BCl_3$) handeln.

Die zumindest eine Verunreinigung liegt nicht in ionischer Form vor.

Das Gemisch kann einen Anteil von 5 ppta bis 1000 ppma, bevorzugt 10 ppta bis 500 ppma, besonders bevorzugt 50 ppta bis 100 ppma, der Verunreinigung enthalten (vor dem Verfahrensschritt a)).

Umfasst das Gemisch eine Borverbindung, weist es nach dem Verfahrensschritt a) oder gegebenenfalls nach dem Verfahrensschritt b) vorzugsweise einen um 80 %, besonders bevorzugt um 90 %, insbesondere um 99 %, verringerten Anteil der Borverbindung als Verunreinigung auf. Die Borabreicherung kann auch bei über 99 % liegen.

Umfasst das Gemisch eine Phosphor-, Arsen- oder Antimonverbindung, weist es nach dem Verfahrensschritt a) oder gegebenenfalls nach dem Verfahrensschritt b) vorzugsweise einen um 70 %, besonders bevorzugt um 80 %, insbesondere um 85 %, verringerten Anteil der genannten Verbindung als Verunreinigung auf. Die Abreicherung kann auch bei über 85 % liegen.

Chlorsilane, die nach dem erfindungsgemäßen Verfahren gereinigt wurden, können zur Herstellung von Polysilicium herangezogen werden, wobei das Polysilicium jeweils weniger als $1000*10^{-12}$, bevorzugt weniger als $100*10^{-12}$, besonders bevorzugt weniger als $10*10^{-12}$, Atomanteile Bor und Arsen aufweist. Die Atomanteile von Phosphor können bei weniger als $1000*10^{-12}$, bevorzugt weniger als $100*10^{-12}$, besonders bevorzugt weniger als $20*10^{-12}$ liegen. Die Atomanteile von Antimon können bei weniger als $1000*10^{-12}$, bevorzugt weniger als $100*10^{-12}$, besonders bevorzugt weniger als $50*10^{-12}$ liegen. Der Widerstand des Polysiliciums beträgt bevorzugt mehr als 4000 Ohm*cm, besonders bevorzugt mehr als 6000 Ohm*cm, insbesondere mehr als 7000 Ohm*cm. Eine zusätzliche Aufreinigung der Chlorsilane (z.B. eine Destillation) ist nach der Durchführung des erfindungsgemäßen Verfahrens grundsätzlich nicht erforderlich.

Gemäß einer bevorzugten Ausführungsform sind die Schritte a) und b) in einen Verbund zur Herstellung von Polysilicium eingebunden. Der Verbund umfasst vorzugsweise folgende Prozesse:

> Erzeugung eines TCS-haltigen Chlorsilangemischs technischer Qualität (Verfahren (1) bis (3)), Aufreinigung des erzeugten Chlorsilangemischs gemäß dem erfindungsgemäßen Verfahren;
> Abscheidung von Polysilicium, bevorzugt nach dem Siemens-Verfahren oder als Granulat.

Ein weiterer Aspekt der Erfindung betrifft die Verwendung des mit einem Amidoxim der allgemeinen Strukturformel (I) funktionalisiert Trägermaterials zur Abtrennung von Borverbindungen, Phosphorverbindungen, Arsenverbindungen und/oder Antimonverbindungen aus einem Gemisch enthaltend Chlorsilane und/oder Organochlorsilane.

Das funktionalisierte Trägermaterial weist dabei vorzugsweise einen Anteil Wasser von < 5 Gew.-%, bevorzugt < 3 Gew.-%, besonders bevorzugt < 2 Gew.-%, auf. Bezüglich der weiteren Ausgestaltung des Amidoxims und des Trägermaterials kann auf die obigen Ausführungen verwiesen werden.

## Beispiele

Beispiel 1: allgemeine Versuchsdurchführung:

Das Adsorbermaterial (erfindungsgemäß funktionalisiertes Trägermaterial oder Vergleichsmaterial) wurde als Festbett in einem Behälter (Kartusche) mit einem Volumen von 180 ml angeordnet und mit einem flüssigen Chlorsilangemisch (TCS-Anteil: > 99 Gew.-%) bei 20°C und 1 bar (g) mit einem Volumenstrom von 1 kg/h (wird die Dichte von TCS (1,34 kg/l) zugrunde gelegt, ergibt sich $7{,}46*10^{-4}$ $m^3/h$) durchströmt. Entsprechend betrug $\tau$ ca. 870 s. Das Gemisch

vor und nach dem Inkontaktbringen mit dem Adsorbermaterial wurde dann als Polysilicium nach dem Siemens-Verfahren abgeschieden und die Dotierstoffkonzentration des Polysiliciums ermittelt. Die Bestimmung der Dotierstoffe erfolgte gemäß SEMI MF 1398 an einem aus dem abgeschiedenen, polykristallinen Material erzeugten FZ-Einkristall (Zonenschmelzverfahren, SEMI MF 1723) mittels Photolumineszenz. Dieses Bestimmungsverfahren ist z.B. in der DE 10 2011 077 455 A1 beschrieben. Oder die Dotierstoffkonzentration der Hauptverunreinigung wurde aus dem spezifischen Widerstand der Probe nach SEMI MF 732 bestimmt (vgl. z.B. Beispiel 1b).

Beispiel 1a

Als Adsorbermaterial wurde ein mit einem Amidoxim der Formel (I) ($R^1$ = H, $R^2$ = H) funktionalisiertes Acrylnitril-Divinylbenzol-Copolymer in Partikelform eingesetzt, wobei die mittlere Partikelgröße 0,400 bis 1,410 mm betrug. Der mittlere Porendurchmesser der funktionalisierten Partikel betrug $400*10^{-10}$ m. Die gemessenen Dotierstoffkonzentrationen sind in der Tabelle 1 aufgeführt.

Tabelle 1

| | Vor Inkontaktbringen des Gemischs mit dem Adsorbermaterial | Nach Inkontaktbringen des Gemischs mit dem Adsorbermaterial |
|---|---|---|
| Bor [ppta] | 7312,0 | 3,4 |
| Phosphor [ppta] | 75,0 | 8,3 |
| Arsen [ppta] | 16,0 | 2,2 |

Beispiel 1b

Im Vergleich zum Beispiel 1a wurde ein flüssiges Chlorsilangemisch mit einer höheren Verunreinigung an Bor eingesetzt. Die gemessenen Borkonzentrationen sind in der Tabelle 2 aufgeführt.

Tabelle 2

| | Vor Inkontaktbringen des Gemischs mit dem Adsorbermaterial | Nach Inkontaktbringen des Gemischs mit dem Adsorbermaterial |
|---|---|---|
| Bor [ppta] | 108000 | 74 |

Beispiel 1c

Als Adsorbermaterial wurde ein mit einem Amidoxim der Formel (I) ($R^1$ = H, $R^2$ = H) funktionalisiertes Acrylnitril-Divinylbenzol-Copolymer eingesetzt (vgl. Beispiel 1a), abweichend zur allgemeinen Versuchsbeschreibung allerdings nur 90 ml (r ca. 435 s). Die gemessenen Dotierstoffkonzentrationen sind in der Tabelle 3 aufgeführt.

Tabelle 3

| | Vor Inkontaktbringen des Gemischs mit dem Adsorbermaterial | Nach Inkontaktbringen des Gemischs mit dem Adsorbermaterial |
|---|---|---|
| Bor [ppta] | 12278, 0 | 22,5 |
| Phosphor [ppta] | 117,0 | 7,7 |
| Arsen [ppta] | 19,0 | 1,7 |

Auch bei einer Reduktion der Verweilzeit $\tau$ auf 435 s (180 ml auf 90 ml Volumen des funktionalisierten Trägers) zeigt sich keine Verschlechterung der Abtrennung der Dotierstoffe (Rückhaltung: B: 99,8%; P: 93,4%; As: 91%).

Vergleichsbeispiel 1d

Als Adsorbermaterial wurde ein Silica-Adsorber (bekannt aus DE 25 46 957 A1) eingesetzt, jedoch abweichend zur allgemeinen Versuchsbeschreibung nur 90 ml (r ca. 435 s). Das flüssige Chlorsilangemisch entsprach dem aus Beispiel 1a. Die gemessenen Dotierstoffkonzentrationen sind in der Tabelle 4 aufgeführt.

Tabelle 4

| | Vor Inkontaktbringen des Gemischs mit dem Adsorbermaterial | Nach Inkontaktbringen des Gemischs mit dem Adsorbermaterial |
|---|---|---|
| Bor [ppta] | 14,7 | 5,2 |
| Phosphor [ppta] | 12,3 | 18,2 |
| Arsen [ppta] | 3,2 | 6,8 |

Die Abtrennung von Bor ist deutlich schlechter. Bei Phosphor und Arsen wird durch den Silica-Adsorber sogar eine Kontamination verursacht. Somit können die mit dem erfindungsgemäßen funktionalisierten Träger erreichbaren Reinheiten nicht ohne zusätzlichen Reinigungsschritt (z.B. Destillation) erzielt werden.

Beispiel 2: allgemeine Versuchsdurchführung:

Das Adsorbermaterial (erfindungsgemäß funktionalisiertes Trägermaterial oder Vergleichsmaterial) wurde als Festbett in Behältern mit unterschiedlichem Volumen angeordnet und mit einem flüssigen Chlorsilangemisch (TCS-Anteil: > 99 Gew.-%) bei 20°C und 1 bar (g) mit unterschiedlichen Volumenströmen durchströmt. Das Gemisch vor und nach dem Inkontaktbringen wurde dann als Polysilicium nach dem Siemens-Verfahren abgeschieden und die Dotierstoffkonzentration wie oben beschrieben ermittelt.

Beispiel 2a

Als Adsorbermaterial wurde ein mit einem Amidoxim der Formel (I) ($R^1$ = H, $R^2$ = H) funktionalisiertes Acrylnitril-Divinylbenzol-Copolymer eingesetzt (vgl. Beispiel 1a). Das Volumen des Behälters betrug 30 l. Der Volumenstrom betrug 12500 kg/h, woraus sich $\tau$ = 12 s ergibt. Die gemessene Borkonzentration ist der Tabelle 5 zu entnehmen.

Tabelle 5

| | Vor Inkontaktbringen des Gemischs mit dem Adsorbermaterial | Nach Inkontaktbringen des Gemischs mit dem Adsorbermaterial |
|---|---|---|
| Bor [ppta] | 160,1 | 12,0 |

Beispiel 2b

Im Vergleich zum Beispiel 2a wurde ein Volumenstrom von 2100 kg/h angewendet, woraus sich $\tau$ = 70 s ergibt. Die gemessenen Dotierstoffkonzentrationen sind in der Tabelle 6 aufgeführt.

Tabelle 6

| | Vor Inkontaktbringen des Gemischs mit dem Adsorbermaterial | Nach Inkontaktbringen des Gemischs mit dem Adsorbermaterial |
|---|---|---|
| Bor [ppta] | 69,4 | 10,6 |
| Phosphor [ppta] | 36,0 | 7,5 |
| Antimon [ppta] | 12,9 | < 1 |

Vergleichsbeispiel 2c

Als Adsorbermaterial wurde ein Silica-Adsorber (bekannt aus DE 25 46 957 A1) eingesetzt. Das Volumen des Behälters betrug 120 l. Der Volumenstrom betrug 46600 kg/h, woraus sich $\tau$ = 12 s ergibt. Die gemessenen Dotierstoffkonzentrationen sind in der Tabelle 6 aufgeführt.

Tabelle 6

| | Vor Inkontaktbringen des Gemischs mit dem Adsorbermaterial | Nach Inkontaktbringen des Gemischs mit dem Adsorbermaterial |
|---|---|---|
| Bor [ppta] | 817,0 | 555,0 |
| Phosphor [ppta] | 145,0 | 124,0 |
| Arsen [ppta] | 19,0 | 18,0 |

Beispiel 3

Bei 20°C und 1 bar (g) wurden in einem Glaskolben 0,54 g eines mit einem Amidoxim der Formel (I) ($R^1$ = H, $R^2$ = H) funktionalisierten Acrylnitril-Divinylbenzol-Copolymers (Adsorbermaterial) mit 20 g eines Chlorsilangemischs (etwa 96 Gew.-% TCS und 4 Gew.-% DCS) über mehrere Stunden versetzt. Anschließend wurde das Adsorbermaterial mit einem Filter abgetrennt. Das Adsorbermaterial lag partikulär mit einem mittleren Durchmesser von 0,4 bis 1,4 mm vor. Der Anteil an Wasser war < 2 Gew.-%. Der mittlere Porendurchmesser der funktionalisierten Partikel betrug $400*10^{-10}$ m. Die Borkonzentration wurde vor und nach dem Inkontaktbringen mittels ICP-OES bestimmt (vgl. Tabelle 7).

Tabelle 7

| | Vor Inkontaktbringen des Gemischs mit dem Adsorbermaterial | Nach Inkontaktbringen des Gemischs mit dem Adsorbermaterial |
|---|---|---|
| Bor [ppmw] | 32,150 | 0,453 |

Beispiel 4

In einem Glaskolben wurden bei 5°C und 1 bar (g) 0,40 g des Adsorbermaterials aus Beispiel 3 mit 15 g eines Chlorsilangemischs (etwa 99 Gew.-% TCS und 1 Gew.-% DCS) über mehrere Stunden versetzt. Die Borkonzentration wurde wie in Beispiel 3 bestimmt (vgl. Tabelle 8).

Tabelle 8

| | Vor Inkontaktbringen des Gemischs mit dem Adsorbermaterial | Nach Inkontaktbringen des Gemischs mit dem Adsorbermaterial |
|---|---|---|
| Bor [ppbw] | 4000 | 53 |

Vergleichsbeispiel 5

In einem Glaskolben wurden bei 20°C und 1 bar (g) 0,40 g partikuläres (Durchmesser von 1,5 bis 4,4 mm), aktiviertes Silicagel (Fa. Xi'an Lvneng Purification Technology) mit 15 g TCS versetzt. Die Borkonzentration wurde wie in den Beispielen 3 und 4 bestimmt (vgl. Tabelle 9).

Tabelle 9

| | Vor Inkontaktbringen des TCS mit dem Silicagel | Nach Inkontaktbringen des TCS mit dem Silicagel |
|---|---|---|
| Bor [ppbw] | 4000 | 1600 |

**Patentansprüche**

1. Verfahren zur teilweisen Entfernung einer Verunreinigung aus einem Gemisch, enthaltend zumindest ein Chlorsilan und/oder Organochlorsilan und zumindest eine Verunreinigung aus der Gruppe mit Borverbindung, Phosphorverbindung, Arsenverbindung und Antimonverbindung, umfassend die Schritte:

   a) Inkontaktbringen des flüssigen Gemischs mit einem Trägermaterial, das mit einem Amidoxim der allgemeinen Strukturformel (I) funktionalisiert ist,

   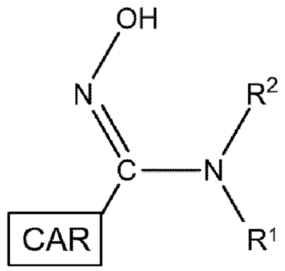 (I),

   mit
   CAR = Trägermaterial und $R^1$, $R^2$ = unabhängig voneinander H, Alkyl, Alkenyl, Aryl, Alkylaryl;
   b) gegebenenfalls Abtrennen des funktionalisierten Trägermaterials

2. Verfahren nach Anspruch 1, **dadurch gekennzeichnet, dass** $R^1$, $R^2$ = unabhängig voneinander H oder Me ist.

3. Verfahren nach Anspruch 1 oder 2, **dadurch gekennzeichnet, dass** es sich bei dem Chlorsilan um ein acyclisches Chlorsilan der allgemeinen Formel $H_xSi_nCl_{(2n+2-x)}$ mit $0 \leq x \geq 12$ und $1 \leq n \geq 5$ handelt und/oder um ein cyclisches Chlorsilan der allgemeinen Formel $H_xSi_nCl_{(2n-x)}$ mit $0 \leq x \geq 20$ und $4 \leq n \geq 10$.

4. Verfahren nach einem der vorherigen Ansprüche, **dadurch gekennzeichnet, dass** das Chlorsilan ausgewählt ist aus der Gruppe mit Tetrachlorsilan, Trichlorsilan, Dichlorsilan und Kombinationen daraus.

5. Verfahren nach einem der vorherigen Ansprüche, **dadurch gekennzeichnet, dass** es sich bei dem Organochlorsilan um ein acyclisches Organochlorsilan der allgemeinen Formel $H_xSi_nR^3_yCl_{(2n+2-x-y)}$ mit $0 \leq x \geq 11$, $1 \leq n \geq 5$ und $1 \leq y \geq 12$ handelt und/oder um ein cyclisches Organochlorsilan der allgemeinen Formel $H_xSi_nR^3_yCl_{(2n-x-y)}$ mit $0 \leq x \geq 19$ , $4 \leq n \geq 10$ und $1 \leq y \geq 20$, wobei $R^3$ = Alkyl, Aryl, Alkylaryl oder Alkoxy.

6. Verfahren nach einem der vorherigen Ansprüche, **dadurch gekennzeichnet, dass** das funktionalisierte Trägermaterial einen Anteil Wasser von weniger als 5 Gew.-%, bevorzugt weniger als 3 Gew.-%, besonders bevorzugt weniger als 2 Gew.-%, enthält.

7. Verfahren nach einem der vorherigen Ansprüche, **dadurch gekennzeichnet, dass** das Trägermaterial ausgewählt ist aus der Gruppe mit Polyacrylnitril, Polyacrylsäure, Polyacrylsäureester, Kieselsäure, Polymethacrylsäure, Polymethacrylsäureester, Styrol-Divinylbenzol-Copolymere und Kombinationen und Copoylmere daraus.

8. Verfahren nach einem der vorherigen Ansprüche, **dadurch gekennzeichnet, dass** das Trägermaterial in partikulärer Form vorliegt und bevorzugt eine Oberfläche von 10 bis 2000 $m^2/g$, besonders bevorzugt von 25 bis 1000 $m^2/g$, insbesondere von 50 bis 500 $m^2/g$, aufweist.

9. Verfahren nach einem der vorherigen Ansprüche, **dadurch gekennzeichnet, dass** das Trägermaterial einen mittleren Porendurchmesser von 40 bis 900 $*10^{-10}$ m, bevorzugt von 50 bis 800 $*10^{-10}$ m, besonders bevorzugt von 75 bis 700 $*10^{-10}$ m, aufweist.

10. Verfahren nach einem der vorherigen Ansprüche, **dadurch gekennzeichnet, dass** in Schritt a) das funktionalisierte Trägermaterial als ein Festbett in einem oder mehreren in Reihe oder parallel angeordneten Behältern vorliegt, die von dem Gemisch bevorzugt kontinuierlich durchströmt werden.

11. Verfahren nach Anspruch 10, **dadurch gekennzeichnet, dass** die hydrodynamische Verweilzeit des Gemischs in

einem Reaktionsvolumen 0,5 bis 1800 s, bevorzugt 1,0 bis 1200 s, besonders bevorzugt 1,5 bis 900 s, beträgt.

**12.** Verfahren nach einem der vorherigen Ansprüche, **dadurch gekennzeichnet, dass** das Abtrennen in Schritt b) durch eine Fest-Flüssig-Trennung, bevorzugt durch Filtration, erfolgt.

**13.** Verfahren nach einem der vorherigen Ansprüche, **dadurch gekennzeichnet, dass** vor dem Schritt a) und/oder nach dem Schritt a) oder gegebenenfalls nach dem Schritt b) die Konzentration der Verunreinigung in dem Gemisch bestimmt wird.

**14.** Verfahren nach einem der vorherigen Ansprüche, **dadurch gekennzeichnet, dass** es sich bei der Verunreinigung um Wasserstoff-, Halogen-, Kohlenstoff-, und/oder Siliciumverbindungen von Bor, Phosphor, Arsen und/oder Antimon handelt.

**15.** Verwendung eines mit einem Amidoxim der allgemeinen Strukturformel (I) funktionalisiert Trägermaterials zur Abtrennung von Borverbindungen, Phosphorverbindungen, Arsenverbindungen und/oder Antimonverbindungen aus einem Gemisch enthaltend Chlorsilane und/oder Organochlorsilane.

## Claims

**1.** Process for partially removing an impurity from a mixture containing at least one chlorosilane and/or organochlorosilane and at least one impurity from the group comprising boron compound, phosphorus compound, arsenic compound and antimony compound, comprising the steps of:

a) contacting the liquid mixture with a carrier material functionalized with an amidoxime of general structural formula (I),

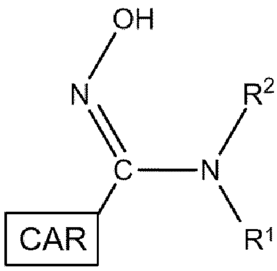

(I),

where
CAR = carrier material and $R^1$, $R^2$ are independently of one another H, alkyl, alkenyl, aryl, alkylaryl;
b) optionally removing the functionalized carrier material.

**2.** Process according to Claim 1, **characterized in that** $R^1$, $R^2$ are independently of one another H or Me.

**3.** Process according to Claim 1 or 2, **characterized in that** the chlorosilane is an acyclic chlorosilane of general formula $H_xSi_nCl_{(2n+2-x)}$ where $0 \leq x \geq 12$ and $1 \leq n \geq 5$ and/or a cyclic chlorosilane of general formula $H_xSi_nCl_{(2n-x)}$ where $0 \leq x \geq 20$ and $4 \leq n \geq 10$.

**4.** Process according to any of the preceding claims, **characterized in that** the chlorosilane is selected from the group comprising tetrachlorosilane, trichlorosilane, dichlorosilane and combinations thereof.

**5.** Process according to any of the preceding claims, **characterized in that** the organochlorosilane is an acyclic organochlorosilane of general formula $H_xSi_nR^3{}_yCl_{(2n+2-x-y)}$ where $0 \leq x \geq 11$, $1 \leq n \geq 5$ and $1 \leq y \geq 12$ and/or a cyclic organochlorosilane of general formula $H_xSi_nR^3{}_yCl_{(2n-x-y)}$ where $0 \leq x \geq 19$, $4 \leq n \geq 10$ and $1 \leq y \geq 20$, wherein $R^3$ = alkyl, aryl, alkylaryl or alkoxy.

**6.** Process according to any of the preceding claims, **characterized in that** the functionalized carrier material contains a proportion of water of less than 5% by weight, preferably less than 3% by weight, particularly preferably less than

2% by weight.

7. Process according to any of the preceding claims, **characterized in that** the carrier material is selected from the group comprising polyacrylonitrile, polyacrylic acid, polyacrylic acid ester, silica, polymethacrylic acid, polymethacrylic acid ester, styrene-divinylbenzene copolymers and combinations and copolymers thereof.

8. Process according to any of the preceding claims, **characterized in that** the carrier material is in particulate form and preferably has a surface area of 10 to 2000 $m^2$/g, particularly preferably of 25 to 1000 $m^2$/g, in particular of 50 to 500 $m^2$/g.

9. Process according to any of the preceding claims, **characterized in that** the carrier material has an average pore diameter of 40 to 900 $*10^{-10}$ m, preferably of 50 to 800 $*10^{-10}$ m, particularly preferably of 75 to 700 $*10^{-10}$ m.

10. Process according to any of the preceding claims, **characterized in that** in step a) the functionalized carrier material is in the form of a fixed bed in one or more containers arranged in series or in parallel which are preferably continuously traversed by the mixture.

11. Process according to Claim 10, **characterized in that** the hydrodynamic residence time of the mixture in a reaction volume is 0.5 to 1800 s, preferably 1.0 to 1200 s, particularly preferably 1.5 to 900 s.

12. Process according to any of the preceding claims, **characterized in that** the removal in step b) is carried out by means of a solid-liquid separation, preferably by filtration.

13. Process according to any of the preceding claims, **characterized in that** the concentration of the impurity in the mixture is determined before step a) and/or after step a) or optionally after step b).

14. Process according to any of the preceding claims, **characterized in that** the impurity is hydrogen, halogen, carbon and/or silicon compounds of boron, phosphorus, arsenic and/or antimony.

15. Use of a carrier material functionalized with an amidoxime of general structural formula (I) for removal of boron compounds, phosphorus compounds, arsenic compounds and/or antimony compounds from a mixture containing chlorosilanes and/or organochlorosilanes.

## Revendications

1. Procédé d'élimination partielle d'une impureté d'un mélange contenant au moins un chlorosilane et/ou un organochlorosilane et au moins une impureté du groupe composé du bore, composé du phosphore, composé de l'arsenic et composé de l'antimoine, comprenant les étapes suivantes :

   a) mise en contact du mélange liquide avec un matériau support qui est fonctionnalisé par une amidoxime de Formule générale (I)

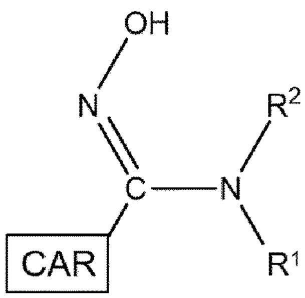

(I)

   dans laquelle
   CAR = matériau support et $R^1$, $R^2$ =, indépendamment l'un de l'autre, H, un alkyle, un alcényle, un aryle, un alkylaryle ;
   b) éventuellement séparation du matériau support fonctionnalisé.

2. Procédé selon la revendication 1, **caractérisé en ce que** $R^1$, $R^2$ =, indépendamment l'un de l'autre, H ou Me.

3. Procédé selon la revendication 1 ou 2, **caractérisé en ce que** le chlorosilane est un chlorosilane acyclique de Formule générale $H_xSi_nCl_{(2n+2-x)}$, avec $0 \leq x \geq 12$ et $1 \leq n \geq 5$, et/ou un chlorosilane cyclique de Formule générale $H_xSi_nCl_{(2n-x)}$, avec $0 \leq x \geq 20$ et $4 \leq n \geq 10$.

4. Procédé selon l'une des revendications précédentes, **caractérisé en ce que** le chlorosilane est choisi dans le groupe tétrachlorosilane, trichlorosilane, dichlorosilane et les combinaisons de ceux-ci.

5. Procédé selon l'une des revendications précédentes, **caractérisé en ce que** l'organosilane est un organochlorosilane acyclique de Formule générale $H_xSi_nR^3{}_yCl_{(2n+2-x-y)}$ avec $0 \leq x \geq 11$, $1 \leq n \geq 5$ et $1 \leq y \geq 12$, et/ou un organochlorosilane cyclique de Formule générale $H_xSi_nR^3{}_yCl_{(2n-x-y)}$ avec $0 \leq x \geq 19$, $4 \leq n \geq 10$ et $1 \leq y \geq 20$, avec $R^3$ = un alkyle, un aryle, un alkylaryle ou un alcoxy.

6. Procédé selon l'une des revendications précédentes, **caractérisé en ce que** le matériau support fonctionnalisé contient une proportion d'eau inférieure à 5 % en poids, de préférence inférieure à 3 % en poids, d'une manière particulièrement préférée inférieure à 2 % en poids.

7. Procédé selon l'une des revendications précédentes, **caractérisé en ce que** le matériau support est choisi dans le groupe polyacrylonitrile, poly(acide acrylique), poly(ester de l'acide acrylique), acide silicique, poly(acide méthacrylique), poly(ester de l'acide méthacrylique), copolymères styrène-divinylbenzène et combinaisons et copolymères de ceux-ci.

8. Procédé selon l'une des revendications précédentes, **caractérisé en ce que** le matériau support se présente sous forme particulaire et présente de préférence une aire de 10 à 2 000 $m^2/g$, d'une manière particulièrement préférée de 25 à 1 000 $m^2/g$, en particulier de 50 à 500 $m^2/g$.

9. Procédé selon l'une des revendications précédentes, **caractérisé en ce que** le matériau support présente un diamètre moyen des pores de 40 à 900 $*10^{-10}$ m, de préférence de 50 à 800 $*10^{-10}$ m, d'une manière particulièrement préférée de 75 à 700 $*10^{-10}$ m.

10. Procédé selon l'une des revendications précédentes, **caractérisé en ce que** dans l'étape a) le matériau support fonctionnalisé se présente sous forme d'un lit fixe dans un ou plusieurs récipients montés en série ou en parallèle, qui sont traversés par le mélange, de préférence en continu.

11. Procédé selon la revendication 10, **caractérisé en ce que** le temps de séjour hydrodynamique du mélange dans un volume réactionnel est de 0,5 à 1 800 s, de préférence de 1,0 à 1 200 s, d'une manière particulièrement préférée de 1,5 à 900 s.

12. Procédé selon l'une des revendications précédentes, **caractérisé en ce que** la séparation de l'étape b) est mise en œuvre par séparation solide-liquide, de préférence par filtration.

13. Procédé selon l'une des revendications précédentes, **caractérisé en ce que**, avant l'étape a) et/ou après l'étape a) ou éventuellement après l'étape b), on détermine la concentration de l'impureté dans le mélange.

14. Procédé selon l'une des revendications précédentes, **caractérisé en ce que** l'impureté est un composé hydrogéné, halogéné, carboné et/ou silicié du bore, du phosphore, de l'arsenic et/ou de l'antimoine.

15. Utilisation d'un matériau support fonctionnalisé par une amidoxime de Formule développée générale (I) pour séparer des composés du bore, des composés du phosphore, des composés de l'arsenic et/ou des composés de l'antimoine, à partir d'un mélange contenant des chlorosilanes et/ou des organochlorosilanes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2016198264 A1
- DE 102014225460 A1
- DE 102008004397 A1
- DE 102008004396 A1
- CA 1162028 A
- EP 0105201 A
- DE 1073460
- US 3126248 A
- JP 2013001632 A
- DE 102011077455 A1
- DE 2546957 A1